# EUROPEAN PATENT APPLICATION

(11) **EP 3 690 569 A1**
(43) Date of publication of application: **05.08.2020**
(21) Application number: 20154546.4
(22) Date of filing: 30.01.2020
(51) Int. Cl.: G05B 19/18, G06Q 30/02

(54) **CUTTING SYSTEM**

(30) Priority: 31.01.2019 JP 2019016004
(71) Applicant: DGSHAPE Corporation, Hamamatsu-shi, Shizuoka 431-2103 (JP)
(72) Inventor: HANAJIMA, Masaki, Hamamatsu-shi, Shizuoka 431-2103 (JP); SAITO, Koji, Hamamatsu-shi, Shizuoka 431-2103 (JP); MINENO, Yosuke, Hamamatsu-shi, Shizuoka 431-2103 (JP); KAWAI, Takayuki, Hamamatsu-shi, Shizuoka 431-2103 (JP); YOSHIOKA, Shiro, Hamamatsu-shi, Shizuoka 431-2103 (JP)
(74) Representative: Grünecker Patent- und Rechtsanwälte PartG mbB

(57) **Abstract**

A profit managing device 120 of a cutting system 1 receives a material usage 163, a tool usage 164, and a spindle rotation time 165 at execution of a cutting program PG1 from a cutting machine 100 and the cutting program PG1. A material cost 193, a tool cost 194, a spindle cost 195, and a personnel cost 196 are calculated based on the material usage 163, the tool usage 164, the spindle rotation time 165, and the operation time 166. Periodic profits 215 in a predetermined period are calculated based on the costs 193 to 196, a depreciation expense 219 for the cutting machine 100 in the predetermined period, and periodic sales that is a total of sales for an object produced by executing the cutting program PG1 executed in the predetermined period.

## Description

### BACKGROUND OF THE INVENTION

### 1. Field

The present invention relates to a cutting system.

### 2. Description of the Background Art

For example, Japanese Laid-open Patent Publication No. 2015-120222 discloses a cutting machine that produces an object by cutting a workpiece made of a predetermined material, such as ceramic, resin, or the like, by molding into a desired shape. The cutting machine disclosed in Japanese Laid-open Patent Publication No. 2015-120222 includes a gripper that grips a bar-shaped processing tool, a spindle that rotates the gripper, and a supporting portion, that is, for example, a frame body that supports the workpiece. The cutting machine cuts the workpiece using the processing tool by changing respective positions of the processing tool that is held by the gripper and is rotating and the workpiece supported by the supporting portion relative to each other. As a result, a desired object can be produced.

### SUMMARY OF THE INVENTION

In the above described cutting machine, profits are calculated for one or more objects produced by the cutting machine in some cases. The profits for the one or more produced objects are calculated, for example, by subtracting costs spent in cutting a workpiece by the cutting machine in order to produce the one or more objects from sales for the one or more objects. Conventionally, calculation of the profits for the one or more objects is manually performed, the above described costs cannot be accurately calculated, and therefore, the profits are estimated in some cases. However, the profits are preferably calculated more accurately.

In view of the foregoing, preferred embodiments of the present invention provide a cutting system that can more accurately calculate profits resulting from an object produced by a cutting machine.

A cutting system disclosed herein includes a cutting machine and a profit managing device. The cutting machine cuts a workpiece, based on a cutting program designated in advance. The profit managing device manages profits when the cutting machine executes the cutting program. The cutting machine includes a tool gripper configured to grip a processing tool, a spindle provided in the tool gripper and configured to rotate the tool gripper, a supporting mechanism configured to support the workpiece, and a controller. The controller includes a tool usage measurement controller, a rotation time measurement controller, and a transmitter. The tool usage measurement controller measures a tool usage of the processing tool gripped by the tool gripper at execution of the cutting program. The rotation time measurement controller measures a spindle rotation time of the spindle at execution of the cutting program. The transmitter transmits the tool usage and the spindle rotation time to the profit managing device. A material usage of the workpiece used in execution of the cutting program is set in the cutting program. The profit managing device includes a management controller. The management controller includes a management storage, a receiver, a time acquirer, a first cost calculator, a second cost calculator, a third cost calculator, a fourth cost calculator, a periodic cost calculator, a depreciation expense calculator, and a profit calculator. An acquisition amount for the cutting machine, a useful life for the cutting machine, and periodic sales that is a total of sales for one or more objects produced by executing the cutting program executed in a predetermined period are stored in the management storage. The receiver receives the tool usage and the spindle rotation time transmitted by the transmitter. The time acquirer acquires an operation time of a user, which has been set for each cutting program executed by the cutting machine. The first cost calculator calculates a material cost at execution of the cutting program, based on the material usage set in the cutting program. The second cost calculator calculates a tool cost at execution of the cutting program, based on the tool usage received by the receiver. The third cost calculator calculates a spindle cost at execution of the cutting program, based on the spindle rotation time received by the receiver. The fourth cost calculator calculates a personnel cost at execution of the cutting program, based on the operation time acquired by the time acquirer. The periodic cost calculator calculates a periodic cost that is a total of costs for the one or more cutting programs executed in the predetermined period, based on the material cost, the tool cost, the spindle cost, and the personnel cost. The depreciation expense calculator calculates a depreciation expense for the cutting machine in the predetermined period, based on the acquisition amount for the cutting machine and the useful life for the cutting machine. The profit calculator calculates periodic profits that are profits in the predetermined period, based on the periodic cost calculated by the periodic cost calculator, the periodic sales, and the depreciation expense for the cutting machine.

According to the cutting system, an object is produced by cutting a workpiece by the cutting machine. As costs spent for this cutting, there are at least the material cost based on the material usage for the workpiece, the tool cost based on the tool usage of the processing tool, the spindle cost based on the spindle rotation time of the spindle, and the personnel cost based on the operation time of the user. The material usage is set in the cutting program executed in cutting of the workpiece. The cutting program is a cutting program actually executed by the cutting machine, and therefore, a value of the material usage is more accurate. After execution of the cutting program by the cutting machine, the tool usage and the spindle rotation time are acquired from the cutting machine. Therefore, the tool usage and the spindle rotation time are acquired from the cutting machine that has actually executed the cutting program, and therefore, a more accurate value can be obtained for each of the tool usage and the spindle rotation time. Respective values of the material cost, the tool cost, and the spindle cost calculated based on the material usage, the tool usage, and the spindle rotation time acquired in the above described manner are more accurate than those manually calculated in a known manner. Therefore, the periodic cost for the cutting program executed in the predetermined period can be more accurately calculated based on the material cost, the tool cost, and the spindle cost calculated in the above described manner. Therefore, the periodic profits in the predetermined period in consideration the depreciation expense for the cutting machine can be more accurately calculated.

According to the present invention, a cutting system that can more accurately calculate profits resulting from an object produced by a cutting machine can be provided.

### BRIEF DESCRIPTION OF THE DRAWINGS

[FIG. 1] FIG. 1 is a conceptual view of a cutting system according to an embodiment.
[FIG. 2] FIG. 2 is a perspective view of a cutting machine.
[FIG. 3] FIG. 3 is a front view of the cutting machine, illustrating a state in which a cover is opened.
[FIG. 4] FIG. 4 is a perspective view of a tool magazine, a rotation supporting member, and a clamp.
[FIG. 5] FIG. 5 is a block diagram of the cutting system.
[FIG. 6] FIG. 6 is a table illustrating an example of a cutting history table.
[FIG. 7] FIG. 7 is a table illustrating an example of an error history table.
[FIG. 8] FIG. 8 is a diagram illustrating a data flow used when a program cost is calculated.
[FIG. 9] FIG. 9 is a diagram illustrating a data flow used when a program error cost is calculated.
[FIG. 10] FIG. 10 is a diagram illustrating a data flow used when periodic profits are calculated.
[FIG. 11] FIG. 11 is a view illustrating a profit screen.

### DETAILED DESCRIPTION OF THE PREFERRED EMBODIMENTS

With reference to the attached drawings, a cutting system according to an embodiment of the present invention will be described below. Note that, as a matter of course, an embodiment described herein is not intended to be particularly limiting the present invention.

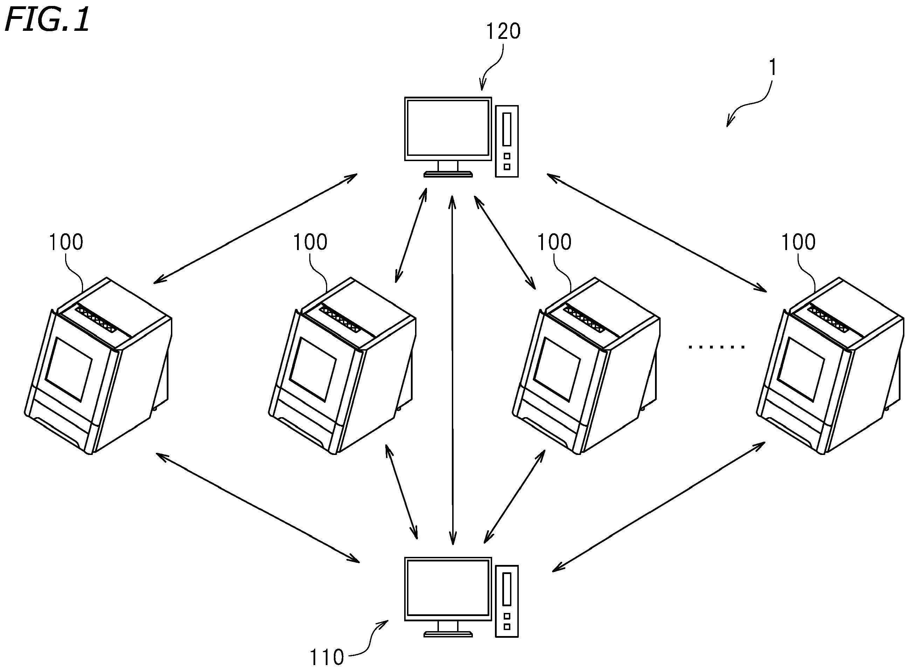

FIG. 1 is a conceptual view of a cutting system 1 according to this embodiment. As illustrated in FIG. 1, the cutting system 1 includes a cutting machine 100, a CAM device 110, and a profit managing device 120. The cutting system 1 calculates costs spent on an object produced by cutting a workpiece 5 by the cutting machine 100 and profits based on the costs and displays the costs and the profits.

There is no particular limitation on the number of cutting machines 100 according to this embodiment. The cutting system 1 may include one or more cutting machines 100. In the cutting system 1, profits or the like for each cutting machine 100 can be calculated and be displayed. Each unit will be described below.

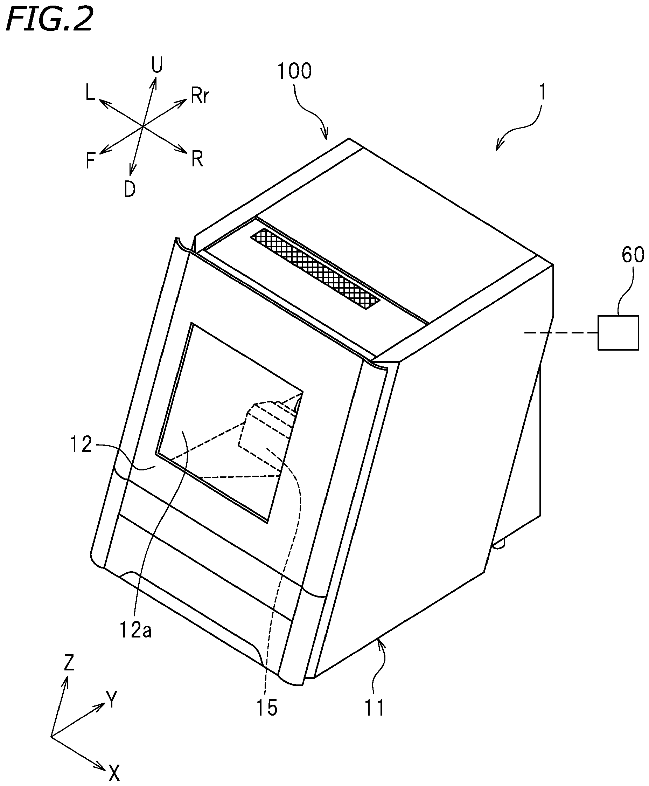

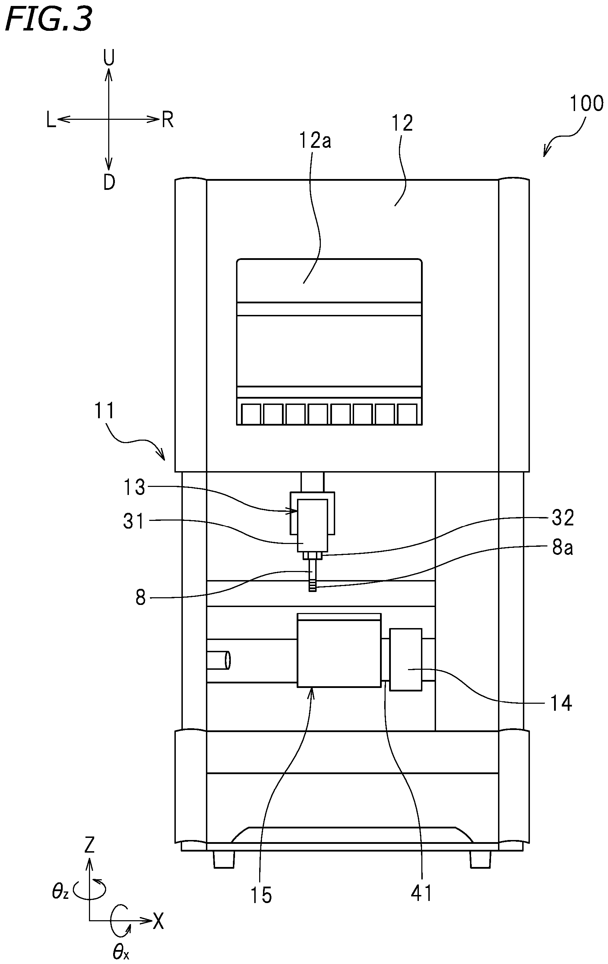

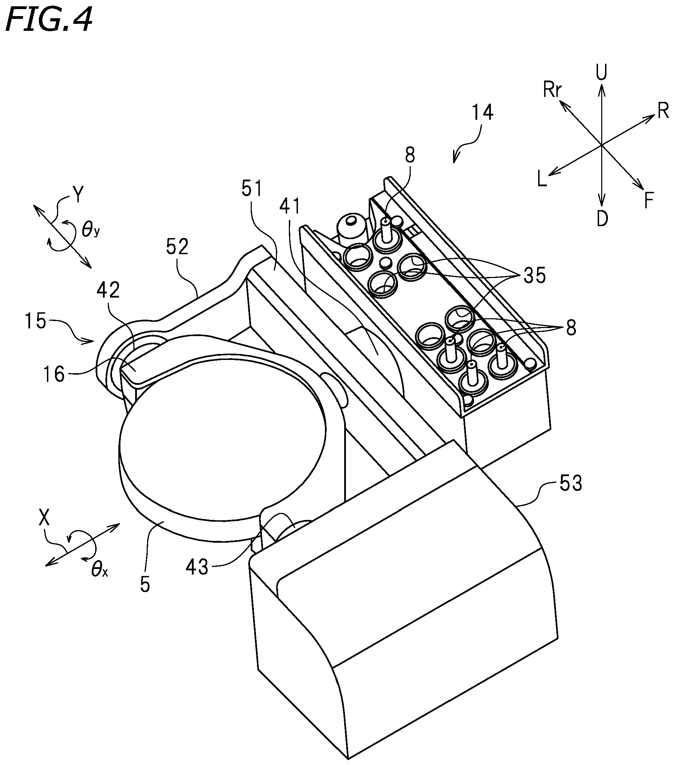

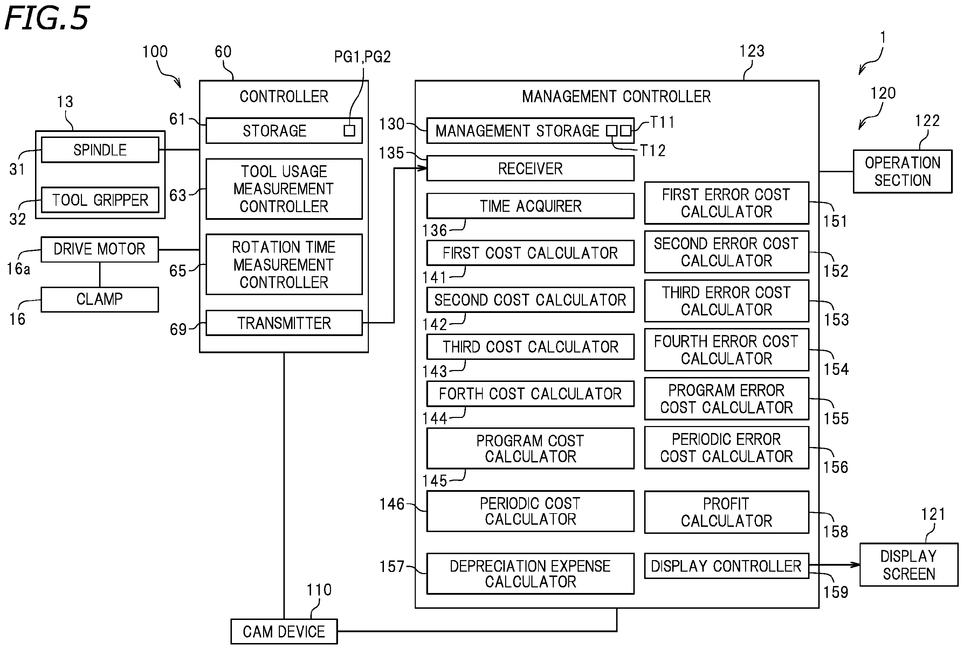

First, the cutting machine 100 will be described. FIG. 2 is a perspective view of the cutting machine 100. FIG. 3 is a front view of the cutting machine 100, illustrating a state in which a cover 12 is opened. FIG. 4 is a perspective view of a tool magazine 14, a rotation supporting member 15, and a clamp 16 which will be described later. FIG. 5 is a block diagram of the cutting system 1. In the following description, left and right mean left and right when viewed from a user who is in front of the cutting machine 100, respectively. A bottom surface that forms an internal space of a main body 11 of the cutting machine 100 is inclined downwardly in a direction from a near side to a further side when viewed from the user. Therefore, in this embodiment, a direction in which the cutting machine 100 approaches the user along the bottom surface is a front direction and a direction in which the cutting machine 100 moves away from the user along the bottom surface is a rear direction. Up and down in a direction perpendicular to the bottom surface mean up and down. Note that reference symbols F, Rr, L, R, U, and D in the drawings indicate front, rear, left, right, up, and down, respectively.

In this embodiment, where axes that are perpendicular to each other are an X axis, a Y axis, and a Z axis, the cutting machine 100 is arranged in a plane surface formed by the X axis and the Y axis. The X axis extends in a left-right direction, the Y axis extends in a front-rear direction, and the Z axis extends in an up-down direction. The reference symbols θx, θy, ad θz in the drawings indicate rotational directions around the X axis, the Y axis, and the Z axis, respectively. However, these directions are used herein merely for convenience of description, do not limit setting modes of the cutting machine 100, and do not limit the present invention.

A plurality of the cutting machine 100 according to this embodiment has the same configuration. Therefore, a configuration of one of the cutting machines 100 will be described below and description of configurations of the other cutting machines 100 will be omitted. However, some or all of the plurality of cutting machines 100 may have different configurations from each other. The cutting machine 100 may be a cutting machine with a so-called a disk changer. Note that, as the disk changer in this case, a known disk changer can be employed. As the disk changer, for example, a workpiece conveying device described in Japanese Laid-open Patent Publication No. 2018-89763 can be employed.

The cutting machine 100 produces an object by cutting a workpiece 5 (see FIG. 4). Herein, there is no particular limitation on a type of the object. However, the object is, for example, a crown prosthesis. Examples of the crown prosthesis include, for example, an inlay, a crown, a bridge, or the like. In this embodiment, the cutting machine 100 is used in the dental field and produces a crown prosthesis from the workpiece 5.

The workpiece 5 has, for example, a disk shape. The workpiece 5 is made of various materials, such as zirconia, a wax, a polymethyl methacrylate resin (PMMA), a hybrid resin, a polyether ether ketone resin (PEEK), plaster, or the like. When zirconia is used as a material of the workpiece 5, for example, semisintered zirconia is used. However, there is no particular limitation on the shape and material of the workpiece 5.

As illustrated in FIG. 2, the cutting machine 100 includes the main body 11, the cover 12, a cutting mechanism 13 (see FIG. 3), the tool magazine 14 (see FIG. 4), the rotation supporting member 15, and the clamp 16 (see FIG. 4). The main body 11 is formed into a box shape and has a space inside. Although not illustrated in detail, the bottom surface that forms the space is inclined downwardly in a direction from the front to the rear. A front portion of the main body 11 is opened. As illustrated in FIG. 3, the cover 12 is supported by the main body 11 such that the opening of the main body 11 is openable and closable. A window 12a is provided in the cover 12. The user can view inside of the main body 11 through the window 12a.

As illustrated in FIG. 3, the cutting mechanism 13 cuts the workpiece 5 using a processing tool 8. The cutting mechanism 13 is brought into contact with the workpiece 5 while the processing tool 8 is rotated, thereby cutting the workpiece 5. The cutting mechanism 13 includes a spindle 31 and a tool gripper 32. The spindle 31 rotates the tool gripper 32 and the processing tool 8 gripped by the tool gripper 32. The spindle 31 is provided so as to be exchangeable with respect to the main body 11. The spindle 31 extends in the up-down direction and is configured to be rotatable around the Z axis (θz). The tool gripper 32 grips the processing tool 8 and is provided in the spindle 31. Specifically, the tool gripper 32 is provided on a bottom surface of the spindle 31. The spindle 31 rotates around the Z axis (θz), and thereby, the tool gripper 32 and the processing tool 8 gripped by the tool gripper 32 rotate around the Z axis (θz), in other words, around a central axis of the processing tool 8. In this embodiment, the cutting mechanism 13 is configured to move in the left-right direction and the up-down direction by a first mover (not illustrated).

In this embodiment, provided are a plurality of processing tools 8, which are gripped by the tool gripper 32. Each of the processing tools 8 has a bar shape and includes an edge tool 8a in a lower portion. The plurality of processing tools 8 each including the edge tool 8a with a different shape is prepared in advance. During cutting, in accordance with a cutting program PG1 (see FIG. 5) which will be described later, the processing tool 8 gripped by the tool gripper 32 is exchanged with another processing tool 8 as necessary.

As illustrated in FIG. 4, the tool magazine 14 can store the plurality of processing tools 8. In this embodiment, the tool magazine 14 is formed into a box shape. A plurality of storage holes 35 in which the processing tools 8 is stored is formed in an upper surface of the tool magazine 14. The processing tools 8 are inserted through the storage holes 35 with upper portions of the processing tools 8 exposed through the storage holes 35. Note that there is no particular limitation on the number of the storage holes 35. In this embodiment, the number of the storage holes 35 is ten. Therefore, in this embodiment, ten processing tools 8 can be stored in the tool magazine 14. In exchanging the processing tool 8 gripped by the tool gripper 32, the processing tool 8 gripped by the tool gripper 32 is returned to the corresponding one of the storage holes 35. Then, the cutting mechanism 13 is moved to a position over the processing tool 8 that is to be used next. Thereafter, an upper edge of the processing tool 8 located under the tool gripper 32 is gripped by the tool gripper 32.

In this embodiment, a first rotation axis 41 that rotationally supports the rotation supporting member 15 is provided in the tool magazine 14. The first rotation axis 41 extends in the left-right direction and is connected to the rotation supporting member 15. Although not illustrated, a second driving mechanism that rotates the first rotation axis 41 is provided in the tool magazine 14. The first rotation axis 41 is configured to be rotatable around the X axis (θx) by the second driving mechanism. The first rotation axis 41 rotates around the X axis (θx), and thereby, the rotation supporting member 15 rotates around the X axis (θx).

The rotation supporting member 15 rotatably supports the clamp 16. The rotation supporting member 15 is formed into a substantially C shape as viewed in a planar view. The rotation supporting member 15 is connected to the tool magazine 14 via the first rotation axis 41. The rotation supporting member 15 includes a first portion 51, a second portion 52, and a third portion 53. The first portion 51 is disposed on a left side of the tool magazine 14 and extends in the front-rear direction. The second portion 52 extends leftward from a rear end of the first portion 51. The third portion 53 extends leftward from a front end of the first portion 51. The third portion 53 is opposed to the second portion 52. In this embodiment, the clamp 16 is disposed between the second portion 52 and the third portion 53.

The clamp 16 supports the workpiece 5 in cutting the workpiece 5. The clamp 16 is an example of a supporting mechanism. In this embodiment, an adapter (not illustrated) is attached to the workpiece 5, and the clamp 16 supports the workpiece 5 via the adapter. For example, the clamp 16 has a shape corresponding to a portion of a shape of the workpiece 5. Herein, the clamp 16 has a substantially C shape. In this embodiment, cutting is performed on the workpiece 5 supported by the clamp 16. The clamp 16 is rotatably supported by the second portion 52 and the third portion 53 of the rotation supporting member 15. One end of a second rotation axis 42 is connected to a rear portion of the clamp 16, and the second portion 52 is connected to the other end of the second rotation axis 42. One end of a third rotation axis 43 is connected to a front portion of the clamp 16, and the third portion 53 is connected to the other end of the third rotation axis 43. In this embodiment, a drive motor 16a (see FIG. 5) that rotates the clamp 16 around the Y axis (θy) is provided in the third portion 53.

As illustrated in FIG. 2, the cutting machine 100 includes a controller 60. The controller 60 controls cutting of the workpiece 5. The controller 60 is formed of a microcomputer and is provided inside the main body 11. The controller 60 includes, for example, a central processing unit (CPU), a ROM that stores a program or the like which is executed by the CPU, a RAM, or the like. Herein, control of cutting of the workpiece 5 is performed using the program stored in the microcomputer.

As illustrated in FIG. 5, the controller 60 is communicably connected to the spindle 31 and controls rotation of the spindle 31. The controller 60 is communicably connected to the drive motor 16a that rotates the clamp 16 around the Y axis (θy) and controls the drive motor 16a. Although not illustrated, the controller 60 is communicably connected to the first driving mechanism that moves the cutting mechanism 13 in the left-right direction and the up-down direction and controls the first driving mechanism. Although not illustrated, the controller 60 is communicably connected to the second driving mechanism that rotates the first rotation axis 41 and controls the second driving mechanism.

The cutting machine 100 according to this embodiment automatically cuts the workpiece 5 using the one or more processing tools 8, based on the cutting program PG1 (see FIG. 5), and thereby, produces desired one or more objects. The cutting machine 100 cuts the workpiece 5, based on the cutting program PG1 designated in advance. The cutting program PG1 is so-called NC data (an NC program) or job data. The cutting program PG1 indicates in what kind of procedure the cutting machine 100 cuts the workpiece 5. In the cutting program PG1, a plurality of processing steps in which an operation of the cutting mechanism 13 and an operation of the clamp 16 that supports the workpiece 5 are defined by coordinate values is recorded.

The cutting program PG1 is created, for example, by a CAM device 110 (see FIG. 1). CAM is an abbreviation of computer aided manufacturing, and the CAM device 110 is a device called computer aided manufacturing device. The CAM device 110 is realized, for example, by a personal computer. This personal computer may be a general-purpose computer and may be a dedicated computer. As illustrated in FIG. 1, the CAM device 110 is communicably connected to the cutting machine 100. The CAM device 110 creates the cutting program PG1, based on data (which will be hereinafter also referred to as object data) for a shape or shapes of one or more objects that are produced by cutting the workpiece 5. Note that the object data is STL data, which is data created, for example, by a computer aided design device (which will be hereinafter also referred to as a CAD device). The cutting program PG1 created by the CAM device 110 is transmitted to the cutting machine 100 from the CAM device 110, for example, at a start of cutting. The cutting machine 100 executes the received cutting program PG1 to produce one or more objects from the workpiece 5.

In the following description, "profits for the cutting machine 100" means a total amount of profits (specifically, profits or losses) for one or more objects produced by the cutting machine 100. Conventionally, when the profits for the cutting machine 100 are managed, the user manually calculates the profits in many cases. Therefore, for the profits for the cutting machine 100, an estimate is calculated in many cases, and therefore, more accurate profits cannot be indicated in some cases. For example, the cutting machine 100 produces an object using several consumables. Examples of the consumables include, for example, the workpiece 5, the processing tool 8, the spindle 31, or the like. The consumables are exchanged after being used to some extent. When the cutting machine 100 cuts the workpiece 5, costs corresponding to an amount of consumption of the consumables are included in the profits, and the profits for the cutting machine 100 are calculated, so that more accurate profits can be calculated. However, when the profits are manually calculated, it is difficult to accurately grasp the amount of consumption of the consumables, and therefore, for each of the costs and the profits for the cutting machine 100, an estimate is calculated for the costs and the profits in many cases.

Therefore, the present inventor focused on information that is obtained from the cutting machine 100 and the cutting program PG1 that is executed when the cutting machine 100 cuts the workpiece 5 in order to more accurately calculate the profits for the cutting machine 100. For example, the cutting machine 100 can grasp a rotation time of the spindle 31 during cutting, the usage of the processing tool 8, or the like. For example, a use cost for the spindle 31 can be calculated by multiplying the rotation time of the spindle 31 by a cost per unit of the rotation time of the spindle 31. For example, a use cost for the processing tool 8 can be calculated by multiplying the usage of the processing tool 8 by a cost per unit of the usage of the processing tool 8.

For example, in the cutting program PG1, information for the workpiece 5 that is cut by executing the cutting program PG1 is set. The information for the workpiece 5 includes a usage of the workpiece 5 that is used in execution of the cutting program PG1. Herein, the usage of the workpiece 5 includes an amount of the workpiece 5 in the object and an amount of a cut portion of the workpiece 5. The usage of the workpiece 5 may be a ratio of the usage of the workpiece 5 to an entire volume of the workpiece 5, that is, a usage rate. Therefore, the usage of the workpiece 5 can be acquired from the cutting program PG1 that has been executed and a material cost for the produced object, based on the usage of the workpiece 5 and a unit price of the workpiece 5. As described above, information acquired from each of the cutting machine 100 and the cutting program PG1 is actual information during cutting, and therefore, is more accurate information. Therefore, the profits for the cutting machine 100 can be more accurately calculated by using the information acquired from each of the cutting machine 100 and the cutting program PG1.

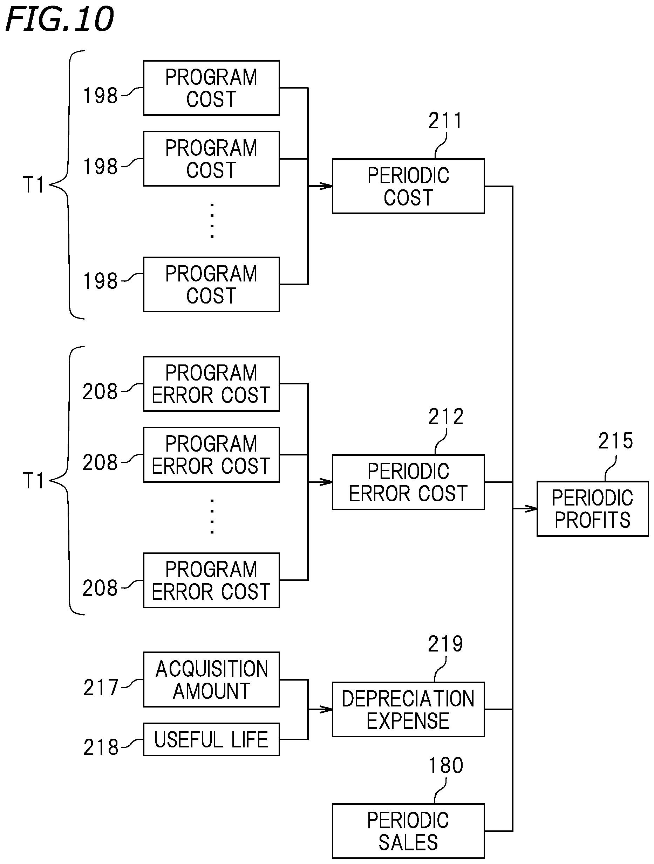

In this embodiment, it is realized to accurately calculate profits for the cutting machine 100 by the profit managing device 120. The profit managing device 120 manages profits for the cutting machine 100 in a predetermined period T1 (see FIG. 10), which are profits when the cutting machine 100 executes the cutting program PG1 and have been calculated in consideration of a depreciation expense for the cutting machine 100. In this embodiment, the profit managing device 120 calculates profits for each cutting program PG1, based on information during cutting obtained from the cutting machine 100 and the cutting program PG1. Herein, the cutting program PG1 is stored in a cutting file (not illustrated), and "for each cutting program PG1" means for each cutting program PG1 or each group of cutting programs PG1 stored in one cutting file.

In this embodiment, as described above, the costs and the profits for the cutting machine 100 are more accurately calculated from the information obtained from the cutting machine 100. Therefore, the controller 60 of the cutting machine 100 transmits necessary information for calculating costs to the profit managing device 120. In this embodiment, as illustrated in FIG. 5, the controller 60 of the cutting machine 100 includes a storage 61, a tool usage measurement controller 63, a rotation time measurement controller 65, and a transmitter 69. Each element of the controller 60 may be configured by a software and may be configured by a hardware. Each element of the controller 60 may be realized by one or more processors and may be incorporated in a circuit.

For example, when cutting starts, the cutting program PG1 transmitted from the CAM device 110 is stored in the storage 61. The cutting machine 100 cuts the workpiece 5 in accordance with the cutting program PG1 created by the CAM device 110 and designated by the user. As used herein "to designate by the user" means "to designate the cutting program PG1, for example, by an operation of an operation section (not illustrated) of the cutting machine 100 by the user.

In the following description, among the cutting programs PG1, a cutting program executed at occurrence of an error in the cutting machine 100 will be referred to as an error program PG2. Herein, there is no particular limitation on contents of an error of the cutting machine 100. The error includes known errors. An error of the cutting machine 100 occurs when the workpiece 5 cannot be properly cut during cutting. Examples of the error include, for example, an error caused when the processing tool 8 is broken, an error caused when the tool gripper 32 cannot grip the processing tool 8, an error caused when the spindle 31 does not rotate at proper rotational speed, an error caused when the cutting mechanism 13 or the clamp 16 cannot move to a proper position, based on the cutting program PG1, or the like.

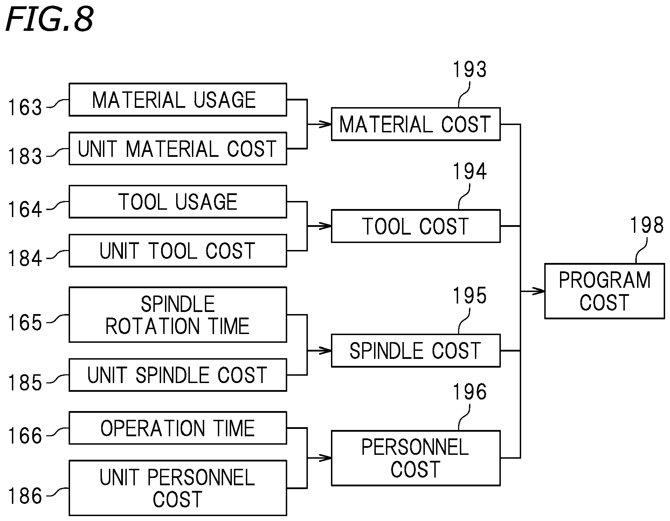

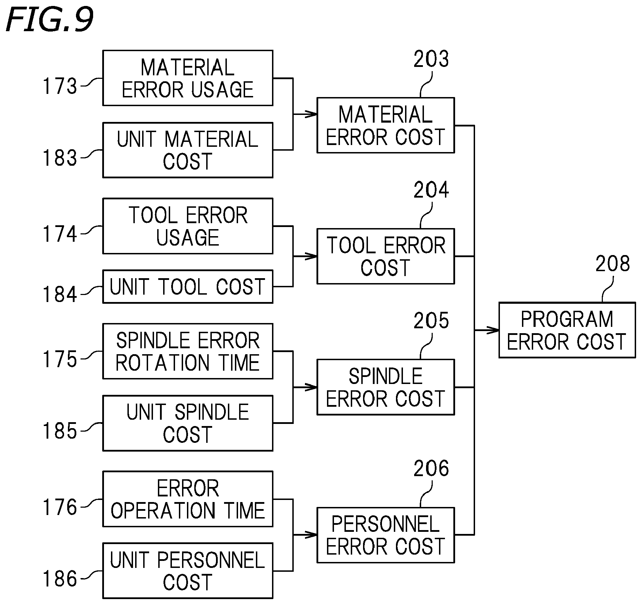

The tool usage measurement controller 63 measures a tool usage 164 (see FIG. 8) of the processing tool 8 gripped by the tool gripper 32 at execution of the cutting program PG1. The tool usage measurement controller 63 measures a tool error usage 174 (see FIG. 9) that is the usage of the processing tool 8 gripped by the tool gripper 32 at execution of the error program PG2. Herein, each of the tool usage 164 and the tool error usage 174 may be, for example, a time during which the processing tool 8 is used at execution of the cutting program PG1 (or the error program PG2) and may be rotational speed at which the processing tool 8 is rotated by the spindle 31. Each of the tool usage 164 and the tool error usage 174 may be measured for each cutting program PG1 (or each error program PG2).

The rotation time measurement controller 65 measures a spindle rotation time 165 (see FIG. 8) of the spindle 31 at execution of the cutting program PG1. The rotation time measurement controller 65 measures a spindle error rotation time 175 (see FIG. 9) of the spindle 31 at execution of the error program PG2. Herein, each of the spindle rotation time 165 and the spindle error rotation time 175 is, for example, a rotation time of the spindle 31 at execution of the cutting program PG1 (or the error program PG2). Each of the spindle rotation time 165 and the spindle error rotation time 175 is measured for each cutting program PG1 (or each error program PG2).

The transmitter 69 transmits, after execution of the cutting program PG1, information obtained during cutting of the workpiece by the cutting machine 100 in accordance with the cutting program PG1 to the profit managing device 120 (specifically, a management controller 123 which will be described later (see FIG. 5)). Specifically, the transmitter 69 transmits the tool usage 164 measured by the tool usage measurement controller 63 and the spindle rotation time 165 measured by the rotation time measurement controller 65 to the profit managing device 120. The transmitter 69 also transmits, after occurrence of an error in the cutting machine 100, the tool error usage 174 measured by the tool usage measurement controller 63 and the spindle error rotation time 175 measured by the rotation time measurement controller 65 to the profit managing device 120.

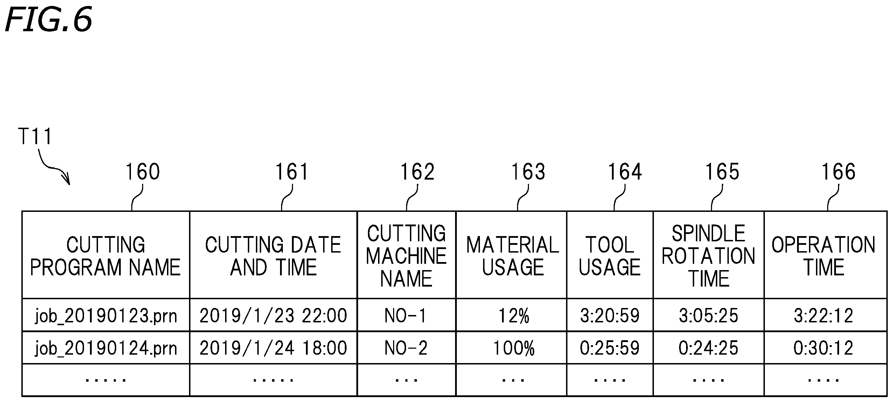

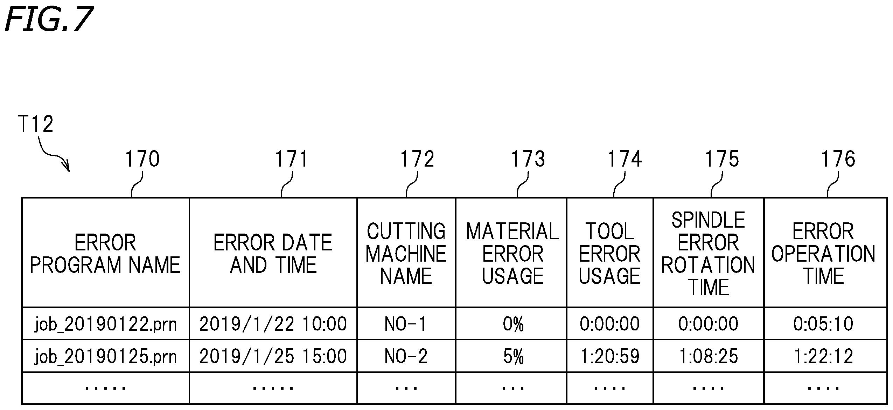

Note that, when the transmitter 69 transmits the tool usage 164 and the spindle rotation time 165 (or the tool error usage 174 and the spindle error rotation time 175), a cutting program name 160 (see FIG. 6. For example, a cutting file name of a cutting file in which the executed cutting program PG1 is stored.), a cutting date and time 161 (see FIG. 6), and a cutting machine name 162 (see FIG. 6) (or an error program name 170, an error date and time 171, and a cutting machine name 172 (for all, see FIG. 7)) may be transmitted. Herein, the cutting machine name 162, 172 is, for example, a device ID that is specific to the cutting machine 100 and has been given to the cutting machine 100 in advance. As the device ID, for example, a serial number given to each cutting machine 100 may be used.

In this embodiment, a material usage 163 (see FIG. 6) or a material error usage 173 (see FIG. 7) of the workpiece 5 used in execution of the cutting program PG1 as described above is set in the cutting program PG1. Therefore, the transmitter 69 transmits the cutting program PG1 (or the error program PG2) itself to the profit managing device 120. However, the transmitter 69 may be configured or programmed to transmit only the material usage 163 (or the material error usage 173) set in the cutting program PG1 (or the error program PG2) to the profit managing device 120.

Next, the profit managing device 120 according to this embodiment will be described in detail. The profit managing device 120 displays effect to investment for the cutting machine 100. Herein, the profit managing device 120 calculates profits in consideration of at least a depreciation expense for the cutting machine 100 and thus displays the effect to investment. The profit managing device 120 is realized, for example, by a personal computer. The profit managing device 120 may be realized by a general-purpose computer and may be realized by a dedicated computer. The profit managing device 120 may be a so-called client-server type device. A portion of the profit managing device 120 may be so-called cloud computing. A portion of the profit managing device 120 may be a mobile terminal. Herein, the term "mobile terminal" includes a smartphone, a tablet terminal, of the like.

As illustrated in FIG. 1, the profit managing device 120 is communicably connected to the plurality of cutting machines 100 and the CAM device 110. There is no particular limitation on a method for the above described connection. The above described connection may be provided via a wired communication and may be provided via a wireless communication. In this embodiment, the profit managing device 120 manages profits for the plurality of cutting machines 100.

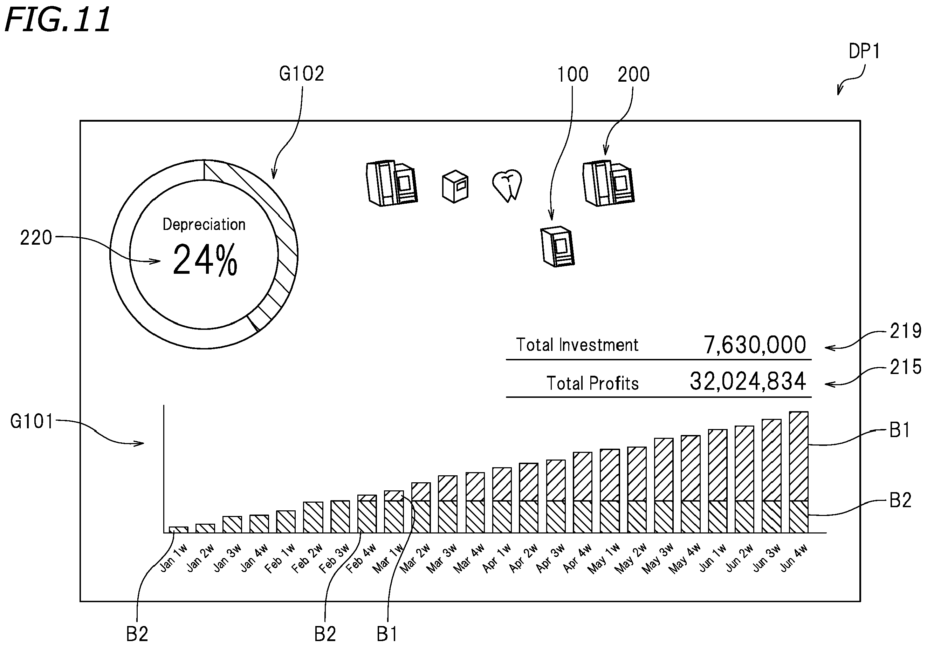

As illustrated in FIG. 5, the profit managing device 120 includes a display screen 121, an operation section 122, and the management controller 123. The costs and the profits for the cutting machine 100 are displayed on the display screen 121. Herein, profits corresponding to the predetermined period T1 (see FIG. 10) designated by the user can be displayed on the display screen 121, and when the plurality of cutting machines 100 is connected to the profit managing device 120, profits for each cutting machine 100 and a total of profits for all of the cutting machines 100 can be displayed on the display screen 121. For example, a profit screen DP1 (see FIG. 11) is displayed on the display screen 121. The profit screen DP1 will be described in detail later.

Note that there is no particular limitation on a type of the display screen 121. For example, the display screen 121 is a display of a mobile terminal. However, the display screen 121 may be a display of a desktop-type or notebook-type personal computer.

The operation section 122 is operated by the user. For example, the user can switch display of the display screen 121 by operating the operation section 122. Note that there is no particular limitation on the type of the operation section 122. For example, the operation section 122 is a touch panel provided on the display screen 121. However, the operation section 122 may be a keyboard or a mouse of the personal computer. Note that, herein, each of the number of the display screens 121 and the number of the operation sections 122 is one. But each of the number of the display screens 121 and the number of the operation sections 122 may be more than one.

The management controller 123 performs control in which information necessary for calculating profits for the cutting machine 100 is acquired from the cutting machine 100 and the CAM device 110 and the costs and the profits for the cutting machine 100 are calculated based on the acquired information. The management controller 123 performs control in which the costs and the profits for the cutting machine 100, which have been calculated, are displayed on the display screen 121. There is no particular limitation on a configuration of the management controller 123. The management controller 123 is, for example, a microcomputer. There is no particular limitation on a configuration of a hardware of the microcomputer. For example, the microcomputer includes a CPU, a ROM, a RAM, a storage, or the like. Note that, when the profit managing device 120 is a client-server type device, the management controller 123 is realized, for example, by a server. When the profit managing device 120 is cloud computing, the management controller 123 is realized, for example, in the cloud.

As illustrated in FIG. 5, the management controller 123 is communicably connected to the controller 60 of the cutting machine 100 and the CAM device 110 via a wired communication or a wireless communication. The management controller 123 is communicably connected to the display screen 121 and the operation section 122.

In this embodiment, the management controller 123 includes a management storage 130, a receiver 135, a time acquirer 136, a first cost calculator 141, a second cost calculator 142, a third cost calculator 143, a fourth cost calculator 144, a program cost calculator 145, and a periodic cost calculator 146. The management controller 123 further includes a first error cost calculator 151, a second error cost calculator 152, a third error cost calculator 153, a fourth error cost calculator 154, a program error cost calculator 155, a periodic error cost calculator 156, a depreciation expense calculator 157, a profit calculator 158, and a display controller 159. Each element of the management controller 123 may be configured by a software and may be configured by a hardware. Each element of the management controller 123 may be realized by one or more processors and may be incorporated in a circuit.

FIG. 6 is a table illustrating an example of a cutting history table T11. FIG. 7 is a table illustrating an example of an error history table T12. The cutting history table T11 (see FIG. 6) and the error history table T12 (see FIG. 7) are stored in the management storage 130. As illustrated in FIG. 6, the cutting history table T11 is a table in which a history of cutting by each cutting machine 100 is registered. The cutting history table T11 is a cutting history table provided for each cutting program PG1. The cutting history table T11 is used for calculating the profits for the cutting machine 100. Note that there is no particular limitation on a configuration of the cutting history table T11. In this embodiment, in the cutting history table T11, the cutting program name 160, the cutting date and time 161, the cutting machine name 162, the material usage 163, the tool usage 164, the spindle rotation time 165, and an operation time 166 are associated. In other words, in the cutting history table T11, there are items, such as the cutting program name 160, the cutting date and time 161, the cutting machine name 162, the material usage 163, the tool usage 164, the spindle rotation time 165, the operation time 166, or the like. Herein, "associated" means a state in which items are described in the same row in the table.

The cutting program name 160 is an item used for identifying the executed cutting program PG1. For example, the cutting program name 160 may be the cutting file name of a cutting file in which the cutting program PG1 is stored and may be a specific identification ID. The cutting date and time 161 is a date or a time of execution of the associated cutting program PG1. The cutting machine name 162 is an item used for identifying the cutting machine 100 that has executed the associated cutting program PG1 and is, for example, the specific device ID given to the cutting machine 100. The material usage 163 is the usage of the workpiece 5 at execution of the associated cutting program PG1. The tool usage 164 is the usage of the processing tool 8 at execution of the associated cutting program PG1. The tool usage 164 may be indicated by the rotational speed of the processing tool 8, and may be indicated by a use time of the processing tool 8. The spindle rotation time 165 is the rotation time of the spindle 31 at execution of the associated cutting program PG1. The spindle rotation time 165 is indicated, for example, by a duration time of rotation of the spindle 31.

The operation time 166 is an operation time of the user in accordance with a type of an object made by the associated cutting program PG1. The operation time 166 includes, for example, a time taken for the CAM device 110 to create the cutting program PG1, a time of designation of the cutting program PG1 by the user via the operation section 122, a time required for a finishing step in which polishing or the like is performed on the object cut by the cutting machine 100, or the like. The operation time 166 can be basically the same for each type of the object (for example, a type of crown prosthesis, such as an inlay, a crown, a bridge, or the like). Therefore, in this embodiment, the operation time 166 is a time set for each type of the object in advance. However, as for the operation time 166, an actual operation time of the user may be measured and the measured time may be used as the operation time 166.

As illustrated in FIG. 7, the error history table T12 is a table in which, when an error occurs in each cutting machine 100, a history of the error is registered. The error history table T12 is an error history table for each cutting program PG1 (in other words, the error program PG2) executed at occurrence of the error. The error history table T12 is used for calculating an error cost for the cutting machine 100. Note that there is no particular limitation on a configuration of the error history table T12. In this embodiment, each item of the error history table T12 corresponds to the corresponding one of the items of the cutting history table T11. In the error history table T12, the error program name 170, the error date and time 171, the cutting machine name 172, the material error usage 173, the tool error usage 174, the spindle error rotation time 175, and an error operation time 176 are associated. In other words, there are items, such as the error program name 170, the error date and time 171, the cutting machine name 172, the material error usage 173, the tool error usage 174, the spindle error rotation time 175, the error operation time 176, or the like in the error history table T12. Note that, each of the items 170 to 176 of the error history table T12 corresponds to the corresponding one of the items 160 to 166 of the cutting history table T11, and therefore, description of the items 170 to 176 will be omitted. The items 170 to 176 are acquired at occurrence of an error in the cutting machine 100.

Note that each of the cutting history table T11 and the error history table T12 may be formed of one table and may be formed of a plurality of tables. The cutting history table T11 and the error history table T12 may be collectively formed by one table. In this case, the collectively formed one table may include an item that indicates whether the associated cutting program PG1 is the cutting program PG1 (that is, the error program PG2) in which an error has occurred. Each of the cutting history table T11 and the error history table T12 may include, as an item, a type of a material of the workpiece 5 or a type of a produced object.

FIG. 8 is a diagram illustrating a data flow used when a program cost 198, which will be described later, is calculated. FIG. 9 is a diagram illustrating a data flow used when a program error cost 208, which will be described later, is calculated. FIG. 10 is a diagram illustrating a data flow used when periodic profits 215, which will be described later, are calculated. In this embodiment, as illustrated in FIG. 10, periodic sales 180 is stored in the management storage 130. The periodic sales 180 is a total of sales for one or more objects produced by executing one or more cutting programs PG1 executed in the predetermined period T1. In this embodiment, a total of sales (which will be hereinafter referred to as cutting program sales) for one or more objects produced by one cutting program PG1 is stored in the management storage 130. The cutting program sales is sales of an object produced by executing the cutting program PG1 and is, when a plurality of objects is produced by the cutting program PG1, a total of sales of the plurality of objects. The cutting program sales is set for each cutting program PG1. The periodic sales 180 may be calculated, for example, by calculating a total of the cutting program prices of the one or more cutting programs PG1 executed in the predetermined period T1.

As illustrated in FIG. 8, the unit material cost 183, the unit tool cost 184, the unit spindle cost 185, and the unit personnel cost 186 are stored in the management storage 130. The unit material cost 183 is a material cost per predetermined unit of a material usage. A material cost 193 that is a cost for the workpiece 5 for one cutting program PG1 is calculated based on the material usage 163 of and the unit material cost 183 for the workpiece 5. Herein, the material cost 193 for the cutting program PG1 is calculated by the material usage 163 × the unit material cost 183. Note that, for example, when the workpieces 5 of a plurality of types, which have different sizes and are made of different materials, are used, that is, when the workpieces 5 of a plurality of types, unit prices of which are different, are used, the unit material cost 183 is set for each of the types of the workpieces 5.

The unit tool cost 184 is a tool cost per predetermined unit of a tool usage. A tool cost 194 that is a cost for the processing tool 8 for one cutting program PG1 is calculated based on the tool usage 164 of and the unit tool cost 184 for the processing tool 8. Herein, the tool cost 194 for the cutting program PG1 is calculated by the tool usage 164 × the unit tool cost 184. Note that, for example, when the processing tools 8 of a plurality of types are used, that is, when the processing tools 8 of a plurality of types, unit prices of which are different, are used, the unit tool cost 184 is set for each of the types of the processing tools 8.

The unit spindle cost 185 is a spindle cost per predetermined unit of a spindle rotation time. A spindle cost 195 that is a use cost for the spindle 31 for the one cutting program PG1 is calculated based on the spindle rotation time 165 of and the unit spindle cost 185 for the spindle 31. Herein, the spindle cost 195 for the cutting program PG1 is calculated by the spindle rotation time 165 × the unit spindle cost 185. Note that a plurality of the unit spindle costs 185 can be set in accordance with a type of the spindle 31 or types of the spindles 31.

The unit personnel cost 186 is a personnel cost per predetermined unit of an operation time. A personnel cost 196 that is a cost for the user for the cutting program PG1 is calculated based on the operation time 166 and the unit personnel cost 186. Herein, the personnel cost 196 for the cutting program PG1 is calculated by the operation time 166 x the unit personnel cost 186. Note that a plurality of the unit personnel costs 186 can be set in accordance with the number of users.

Note that the periodic sales 180 (or the cutting program sales), the unit material cost 183, the unit tool cost 184, the unit spindle cost 185, and the unit personnel cost 186 stored in the management storage 130 are set, for example, by inputting the periodic sales 180, the unit material cost 183, the unit tool cost 184, the unit spindle cost 185, and the unit personnel cost 186 in a master screen (not illustrated) displayed on the display screen 121 via the operation section 122 by the user.

The receiver 135 receives information for cutting of the cutting machine 100, which has been transmitted from the transmitter 69 of the cutting machine 100. In this embodiment, the receiver 135 receives the tool usage 164 and the spindle rotation time 165 transmitted by the transmitter 69. When an error occurs in the cutting machine 100, as illustrated in FIG. 9, the receiver 135 receives the tool error usage 174 and the spindle error rotation time 175 transmitted by the transmitter 69. As illustrated in FIG. 6 and FIG. 7, the receiver 135 receives the cutting program name 160 (or the error program name 170), the cutting date and time 161 (or the error date and time 171), and the cutting machine name 162, 172 which have been transmitted by the transmitter 69 and also receives the cutting program PG1 itself or the material usage 163, 173 of the workpiece 5, based on the cutting program PG1.

Note that the information received by the receiver 135 is registered in the cutting history table T11 or the error history table T12 as appropriate. For example, when the cutting program PG1 executed by the cutting machine 100 normally ends, information for the cutting machine 100, which has been received by the receiver 135, is registered in the cutting history table T11. On the other hand, when an error occurs in the cutting machine 100, information for the error of the cutting machine 100, which has been received by the receiver 135, is registered in the error history table T12. As illustrated above, one or more additional rows are added to one or more rows in each of the cutting history table T11 and the error history table T12 as appropriate in accordance with the information for the cutting machine 100, which has been received by the receiver 135.

The time acquirer 136 acquires the operation time 166 (see FIG. 8) set for each cutting program PG1 executed by the cutting machine 100 (in other words, for each type of an object produced by executing the cutting program PG1). The time acquirer 136 acquires the error operation time 176 (see FIG. 9) set for each error program PG2 executed by the cutting machine 100 (in other words, for each type of an object presumed to have been produced by executing the error program PG2). As described above, each of the operation time 166 and the error operation time 176 is, for example, a time taken for the CAM device 110 to create the cutting program PG1, a time of designation of each of the cutting program PG1 and the error program PG2 by the user via the operation section 122, a time required for a finishing step in which polishing or the like is performed on an object cut by the cutting machine 100, or the like, is set for each cutting program PG1, and is also set for each type of the object in advance. For example, the operation time 166 is set for each type of the object via the master screen (not illustrated) displayed on the display screen 121. The operation time 166 set for each type of the object is stored in the management storage 130. In other words, the operation time 166 set for each cutting program PG1 and each error program PG2 executed by the cutting machine 100 is stored in the management storage 130 in advance. The time acquirer 136 extracts the type of the object from the cutting program PG1 executed by the cutting machine 100. The time acquirer 136 then acquires the operation time 166 in accordance with the type of the object, which has been extracted, from the management storage 130. Note that the time acquirer 136 may be configured or programmed to acquire the operation time 166 from the cutting machine 100.

As illustrated in FIG. 8, the first cost calculator 141 calculates the material cost 193 at execution of the cutting program PG1, based on the material usage 163 of the workpiece 5, which has been set in the cutting program PG1. Herein, the first cost calculator 141 calculates the material cost 193 for each cutting program PG1 of the cutting history table T11, based on the material usage 163 and the unit material cost 183, by multiplying the material usage 163 and the unit material cost 183 together.

The second cost calculator 142 calculates the tool cost 194 at execution of the cutting program PG1, based on the tool usage 164 received by the receiver 135. Herein, the second cost calculator 142 calculates the tool cost 194 for each cutting program PG1 of the cutting history table T11, based on the tool usage 164 and the unit tool cost 184, by multiplying the tool usage 164 and the unit tool cost 184 together.

The third cost calculator 143 calculates the spindle cost 195 at execution of the cutting program PG1, based on the spindle rotation time 165 received by the receiver 135. Herein, the third cost calculator 143 calculates the spindle cost 195 for each cutting program PG1 of the cutting history table T11, based on the spindle rotation time 165 and the unit spindle cost 185, by multiplying the spindle rotation time 165 and the unit spindle cost 185 together.

The fourth cost calculator 144 calculates the personnel cost 196 at execution of the cutting program PG1, based on the operation time 166 obtained by the time acquirer 136. Herein, the fourth cost calculator 144 calculates the personnel cost 196 for each cutting program PG1 of the cutting history table T11, based on the operation time 166 and the unit personnel cost 186, by multiplying the operation time 166 and the unit personnel cost 186 together.

The program cost calculator 145 calculates the program cost 198 at execution of one cutting program PG1, based on the material cost 193, the tool cost 194, the spindle cost 195, and the personnel cost 196 calculated by the first to fourth cost calculators 141 to 144. The program cost 198 is a cost spent at execution of one cutting program PG1. In this embodiment, the program cost calculator 145 adds the material cost 193, the tool cost 194, the spindle cost 195, and the personnel cost 196 for each cutting program PG1 in the cutting history table T11, thereby calculating the program cost 198.

As illustrated in FIG. 9, the first error cost calculator 151 calculates a material error cost 203 at execution of the error program PG2, based on the material error usage 173 of the workpiece 5, which has been set in the error program PG2. Herein, the first error cost calculator 151 calculates the material error cost 203 for each error program PG2 of the error history table T12, based on the material error usage 173 and the unit material cost 183, by multiplying the material error usage 173 and the unit material cost 183 together.

The second error cost calculator 152 calculates a tool error cost 204 at execution of the error program PG2, based on the tool error usage 174 received by the receiver 135. Herein, the second error cost calculator 152 calculates the tool error cost 204 for each error program PG2 of the error history table T12, based on the tool error usage 174 and the unit tool cost 184, by multiplying the tool error usage 174 and the unit tool cost 184 together.

The third error cost calculator 153 calculates a spindle error cost 205 at execution of the error program PG2, based on the spindle error rotation time 175 received by the receiver 135. Herein, the third error cost calculator 153 calculates the spindle error cost 205 for each error program PG2 of the error history table T12, based on the spindle error rotation time 175 and the unit spindle cost 185, by multiplying the spindle error rotation time 175 and the unit spindle cost 185 together.

The fourth error cost calculator 154 calculates a personnel error cost 206 at execution of the error program PG2, based on the error operation time 176 acquired by the time acquirer 136. Herein, the fourth error cost calculator 154 calculates the personnel error cost 206 for each error program PG2 of the error history table T12, based on the error operation time 176 and the unit personnel cost 186, by multiplying the error operation time 176 and the unit personnel cost 186 together.

The program error cost calculator 155 calculates a program error cost 208 at execution of the error program PG2, based on the material error cost 203, the tool error cost 204, the spindle error cost 205, and the personnel error cost 206 calculated by the first to fourth error cost calculators 151 to 154. The program error cost 208 is a cost spent at execution of one error program PG2. In this embodiment, the program error cost calculator 155 adds the material error cost 203, the tool error cost 204, the spindle error cost 205, and the personnel error cost 206 for each error program PG2 in the error history table T12, thereby calculating the program error cost 208.

As illustrated in FIG. 10, in this embodiment, a periodic cost 211 and a periodic error cost 212 can be calculated. Herein, the periodic cost 211 is a total of the program cost 198 in the cutting program PG1 executed in the predetermined period T1. The periodic error cost 212 is a total of the program error cost 208 in the error program PG2 executed in the predetermined period T1. There is no particular limitation on the predetermined period T1. For example, the predetermined period T1 may be one day, may be one week, and may be one month. The predetermined period T1 is stored in the management storage 130.

In this embodiment, the periodic cost 211 is calculated by the periodic cost calculator 146. The periodic error cost 212 is calculated by the periodic error cost calculator 156. The periodic cost calculator 146 calculates the periodic cost 211 for the one or more cutting programs PG1 executed in the predetermined period T1, based on the material cost 193, the tool cost 194, the spindle cost 195, and the personnel cost 196. In this embodiment, the periodic cost calculator 146 calculates the periodic cost 211 in the one or more cutting programs PG1 executed in the predetermined period T1 from the cutting history table T11, based on the cutting date and time 161 (see FIG. 6) of the cutting history table T11. Herein, the periodic cost calculator 146 calculates the periodic cost 211 by adding all of the program costs 198 for the one or more cutting programs PG1 executed in the predetermined period T1.

The periodic error cost calculator 156 calculates the periodic error cost 212 that is a total of costs for one or more error programs PG2 executed in the predetermined period T1, based on the material error cost 203, the tool error cost 204, the spindle error cost 205, and the personnel error cost 206. In this embodiment, the periodic error cost calculator 156 calculates the periodic error cost 212 in the one or more error programs PG2 executed in the predetermined period T1 from the error history table T12, based on the error date and time 171 (see FIG. 7) in the error history table T12. Herein, the periodic error cost calculator 156 calculates the periodic error cost 212 by adding all of the program error costs 208 for the one or more error programs PG2 executed in the predetermined period T1.

The depreciation expense calculator 157 calculates a depreciation expense 219 for the cutting machine 100 in the predetermined period T1. In this embodiment, an acquisition amount 217 for the cutting machine 100 and a useful life 218 for the cutting machine 100 are stored in the management storage 130. Note that, when a plurality of cutting machines 100 is connected to the profit managing device 120, the acquisition amount 217 and the useful life 218 are stored for each of the cutting machines 100 in the management storage 130. The depreciation expense calculator 157 calculates the depreciation expense 219 for the cutting machine 100 in the predetermined period T1, based on the acquisition amount 217 for the cutting machine 100 and the useful life 218 for the cutting machine 100. Note that the depreciation expense 219 can be calculated by the predetermined period T1/the useful life 218 × the acquisition amount 217.

Note that, in this embodiment, the depreciation expense calculator 157 calculates the depreciation expense 219 for the cutting machine 100. However, the depreciation expense calculator 157 can calculate a depreciation expense for another device. Herein, examples of the another device include, for example, the CAM device 110, an intraoral scanner, or the like. In this case, the depreciation expense 219 is a total of the depreciation expense for the cutting machine 100 (when the plurality of cutting machines 100 is connected, a total of depreciation expenses for all of the cutting machines 100) and the depreciation expense for the another device in the predetermined period T1.

The profit calculator 158 calculates the periodic profits 215 that are profits in the predetermined period T1, based on the periodic cost 211 calculated by the periodic cost calculator 146, the periodic error cost 212 calculated by the periodic error cost calculator 156, the periodic sales 180, and the depreciation expense 219 calculated by the depreciation expense calculator 157. In this embodiment, the profit calculator 158 calculates the periodic profits 215 in the predetermined T1 by subtracting the periodic cost 211, the periodic error cost 212, and the depreciation expense 219 from the periodic sales 180.

The display controller 159 displays the periodic profits 215 in consideration of the depreciation expense 219 in the predetermined period T1 on the display screen 121. Note that there is no particular limitation on a method for displaying the periodic profits 215. For example, the periodic profits 215 are displayed using, for example, a graph, a table, or the like.

FIG. 11 is a view illustrating the profit screen DP1. The profit screen DP1 is a screen on which the periodic profits 215 and the depreciation expense 219 for the cutting machine 100 in the predetermined period T1 are displayed. In this embodiment, the profit screen DP1 includes a bar graph G101 in which the periodic profits 215 and the depreciation expense 219 are indicated, and a donut graph G102. The bar graph G101 indicates the periodic profits 215 and the depreciation expense 219 in the predetermined period T1, for example, from the begging of a year in question. However, there is no particular limitation on a period for which the periodic profits 215 and the depreciation expense 219 are indicated by the bar graph G101.

In this embodiment, in each period, two kinds of bars B1 and B2 are given. Each bar B1 indicates the periodic profits 215 and is in a first color (for example, blue). Each bar B2 indicates the depreciation expense 219 and is in a second color (for example, red) which is a different color from the first color. In this embodiment, a first bar B2 from left in FIG. 11 indicates the depreciation expense 219 in a first week of January. Tenth bars B1 and B2 from the left in FIG. 11 indicate the periodic profits 215 and the depreciation expense 219, respectively, for a period from the first week of January to a second week of March. For example, first bars B1 and B2 from right in FIG. 11 indicate the periodic profits 215 and the depreciation expense 219, respectively, for a period from the first week of January to a fourth week of June. In the bar graph G101, the depreciation expense 219 is constant from a certain period. In FIG. 11, the depreciation expense 219 is constant in and after a second week of February. This means that the depreciation for the cutting machine 100 is completed in a third week of February.

In this embodiment, for the periodic profits 215 in the predetermined period T1 calculated by the profit calculator 158, the display controller 159 displays, on the display screen 121, whether profits were generated. It is indicated that, in the bar graph G101, in a period for which the bar B1 is indicated, profits were generated. In an example illustrated in FIG. 11, the bars B1 are indicated after the third week of February. Therefore, profits were generated after the third week of February. Note that, in the profit screen DP1 illustrated in FIG. 11, the periodic profits 215 and the depreciation expense 219 indicated by respective numerical values are periodic profits and a depreciation expense in the predetermined period T1, where the predetermined period T1 is a period from the beginning of the year in question to the fourth week of June.

In this embodiment, a sales turnover for the cutting machine 100 is stored in the management storage 130. A sales turnover for another cutting machine 200 of a different type from a type of the cutting machine 100 is also stored in the management storage 130. The sales turnover for the cutting machine 100 and the sales turnover for the another cutting machine 200 may be different from each other, and may be the same. As the another cutting machine 200, one or more cutting machines of one type may be provided and cutting machines of a plurality of types may be provided. The display controller 159 displays the cutting machine 100 or the another cutting machine 200 that can be purchased using the periodic profits 215 on the display screen 121, based on the periodic profits 215, the sales turnover for the cutting machine 100 and the sales turnover for the another cutting machine 200. In this embodiment, in an upper portion of the profit screen DP1, an icon indicating each of the cutting machine 100 and the another cutting machine 200 is displayed. The cutting machine 100 and the other cutting machine 200 of a number corresponding to the number of the displayed icons can be purchased using the periodic profits 215 in the predetermined period T1 (the period from the beginning of the year in question to the fourth week of June in this case).

The donut graph G102 of the profit screen DP1 is a graph indicating a depreciation status. As the depreciation status, for example, a ratio 220 of the depreciation expense 219 to the periodic profits 215 is indicated. Note that there is no particular limitation on an expression used for calculating the depreciation status. Note that a value of the ratio 220 is a numerical value indicated as an example. The donut graph G102 can be omitted.

As described above, in this embodiment, the workpiece 5 is cut by the cutting machine 100, and thereby, an object is produced. As costs spent for this cutting, as illustrated in FIG. 8, there are at least the material cost 193 based on the material usage 163 for the workpiece 5, the tool cost 194 based on the tool usage 164 of the processing tool 8, the spindle cost 195 based on the spindle rotation time 165 of the spindle 31, and the personnel cost 196 based on the operation time 166 of the user, which has been set for each type of the object. The material usage 163 is set in the cutting program PG1 executed in cutting of the workpiece 5. The cutting program PG1 is a cutting program actually executed by the cutting machine 100, and therefore, a value of the material usage 163 is more accurate. After execution of the cutting program PG1 by the cutting machine 100, the tool usage 164 and the spindle rotation time 165 are acquired from the cutting machine 100. Therefore, the tool usage 164 and the spindle rotation time 165 are acquired from the cutting machine 100 that has actually executed the cutting program PG1, and therefore, a more accurate value can be obtained for each of the tool usage 164 and the spindle rotation time 165. Respective values of the material cost 193, the tool cost 194, and the spindle cost 195 calculated based on the material usage 163, the tool usage 164, and the spindle rotation time 165 acquired in the above described manner are more accurate than those manually calculated in a known manner. Therefore, the periodic cost 211 for the one or more cutting programs PG1 executed in the predetermined T1 can be more accurately calculated based on the material cost 193, the tool cost 194, the spindle cost 195, and the personnel cost 196. Accordingly, the periodic profits 215 in the predetermined period T1 in consideration of the depreciation expense 219 for the cutting machine 100 can be more accurately calculated.

In this embodiment, as illustrated in FIG. 8, the first cost calculator 141 calculates the material cost 193 from the material usage 163 and the unit material cost 183. The second cost calculator 142 calculates the tool cost 194 from the tool usage 164 and the unit tool cost 184. The third cost calculator 143 calculates the spindle cost 195 from the spindle rotation time 165 and the unit spindle cost 185. The fourth cost calculator 144 calculates the personnel cost 196 from the operation time 166 and the unit personnel cost 186. As described above, the unit material cost 183, the unit tool cost 184, the unit spindle cost 185, and the unit personnel cost 186 are set in advance, and thereby, the material cost 193, the tool cost 194, the spindle cost 195, and the personnel cost 196 can be easily calculated based on the material usage 163, the tool usage 164, the spindle rotation time 165, and the operation time 166, respectively.

In this embodiment, the display controller 159 displays, on the display screen 121, whether profits were generated for the periodic profits 215 in the predetermined period T1, which has been calculated by the profit calculator 158. In the profit screen DP1 of FIG. 11, the bars B1 of the bar graph G101 indicate the periodic profits 215 in the predetermined period T1 (the period from the beginning of the year in question in FIG. 11), and it is indicated that, in the period for which the bars B1 are indicated, profits were generated. Thus, the user can visually grasp in which period profits were generated.

In this embodiment, the display controller 159 displays whether profits were generated for the periodic profits 215 in the predetermined period T1 using the bar graph G101. Thus, the user can visually grasp easily in which period profits were generated by viewing the display screen 121.

In this embodiment, the sales turnover for the cutting machine 100 and the sales turnover for the another cutting machine 200 are stored in the management storage 130. The display controller 159 displays the cutting machine 100 or the another cutting machine 200 that can be purchased using the periodic profits 215 on the display screen 121, based on the periodic profits 215, the sales turnover for the cutting machine 100, and the sales turnover for the another cutting machine 200. Thus, it is possible to encourage the user to purchase the cutting machine 100, 200 using generated profits.

In this embodiment, as illustrated in FIG. 9, the first error cost calculator 151 calculates the material error cost 203 at execution of the error program PG2, based on the material error usage 173 set in the error program PG2. The second error cost calculator 152 calculates the tool error cost 204 at execution of the error program PG2, based on the tool error usage 174 received by the receiver 135. The third error cost calculator 153 calculates the spindle error cost 205 at execution of the error program PG2, based on the spindle error rotation time 175 received by the receiver 135. The fourth error cost calculator 154 calculates the personnel error cost 206 at execution of the error program PG2, based on the error operation time 176 acquired by the time acquirer 136. The periodic error cost calculator 156 calculates the periodic error cost 212 that is a total of costs for the one or more error programs PG2 in the predetermined period T1, based on the material error cost 203, the tool error cost 204, the spindle error cost 205, and the personnel error cost 206. In this embodiment, when an error occurs in the cutting machine 100, the cutting machine 100 can grasp the cutting program PG1, the material error usage 173, the tool error usage 174, the spindle error rotation time 175, and the error operation time 176 at occurrence of the errors. Therefore, respective values of the material error cost 203, the tool error cost 204, the spindle error cost 205, and the personnel error cost 206 calculated based on the material error usage 173, the tool error usage 174, the spindle error rotation time 175, and the error operation time 176 at occurrence of the error are more accurate. Accordingly, the periodic error cost 212 for the one or more error programs PG2 executed in the predetermined period T1 can be more accurately calculated based on the material error cost 203, the tool error cost 204, the spindle error cost 205, and the personnel error cost 206 calculated in the above described manner.

In this embodiment, as illustrated in FIG. 1, the plurality of cutting machines 100 is connected to the profit managing device 120. Thus, the costs and the profits for the plurality of cutting machines 100 can be collectively managed. Therefore, the costs and the profits for the plurality of cutting machines 100 can be easily managed.

In the above described embodiment, the profit managing device 120 is communicably connected to the plurality of cutting machines 100. Among companies that introduce the cutting system 1, some have a plurality of business bases in different locations. In this case, there is a probability that one or more cutting machines 100 are introduced in each of the business bases. Therefore, the profit managing device 120 may be configured to calculate periodic profits for each business base and display the periodic profits on the display screen 121 for each business base.

## Claims

1. A cutting system (1) comprising:
a cutting machine (100) configured to cut a workpiece (5), based on a cutting program (PG1) designated in advance; and
a profit managing device (120) configured or programmed to manage profits when the cutting machine (100) executes the cutting program (PG1),
wherein the cutting machine (100) includes
a tool gripper (32) configured to grip a processing tool (8),
a spindle (31) provided in the tool gripper (32) and configured to rotate the tool gripper (32),
a supporting mechanism (16) configured to support the workpiece (5), and
a controller (60),
the controller (60) includes
a tool usage measurement controller (63) configured or programmed to measure a tool usage (164) of the processing tool (8) gripped by the tool gripper (32) at execution of the cutting program (PG1),
a rotation time measurement controller (65) configured or programmed to measure a spindle rotation time (165) of the spindle (31) at execution of the cutting program (PG1), and
a transmitter (69) configured or programmed to transmit the tool usage (164) and the spindle rotation time (165) to the profit managing device (120),
a material usage (163) of the workpiece (5) used in execution of the cutting program (PG1) is set in the cutting program (PG1),
the profit managing device (120) includes a management controller (123), and
the management controller (123) includes
a management storage (130) in which an acquisition amount (217) for the cutting machine (100), a useful life (218) for the cutting machine (100), and periodic sales (180) that is a total of sales for one or more objects produced by executing the cutting program (PG1) executed in a predetermined period (T1) are stored,
a receiver (135) configured or programmed to receive the tool usage (164) and the spindle rotation time (165) transmitted by the transmitter (69),
a time acquirer (136) configured or programmed to acquire an operation time (166) of a user, which has been set for each cutting program (PG1) executed by the cutting machine (100),
a first cost calculator (141) configured or programmed to calculate a material cost (193) at execution of the cutting program (PG1), based on the material usage (163) set in the cutting program (PG1),
a second cost calculator (142) configured or programmed to calculate a tool cost (194) at execution of the cutting program (PG1), based on the tool usage (164) received by the receiver (135),
a third cost calculator (143) configured or programmed to calculate a spindle cost (195) at execution of the cutting program (PG1), based on the spindle rotation time (165) received by the receiver (135),
a fourth cost calculator (144) configured or programmed to calculate a personnel cost (196) at execution of the cutting program (PG1), based on the operation time (166) acquired by the time acquirer (136), and
a periodic cost calculator (146) configured or programmed to calculate a periodic cost (211) that is a total of costs for the cutting program (PG1) executed in the predetermined period (T1), based on the material cost (193), the tool cost (194), the spindle cost (195), and the personnel cost (196),
a depreciation expense calculator (157) configured or programmed to calculate a depreciation expense (219) for the cutting machine (100) in the predetermined period (T1), based on the acquisition amount (217) for the cutting machine (100) and the useful life (218) for the cutting machine (100), and
a profit calculator (158) configured or programmed to calculate periodic profits (215) that are profits in the predetermined period (T1), based on the periodic cost (211) calculated by the periodic cost calculator (146), the periodic sales (180), and the depreciation expense (219) for the cutting machine (100).

2. The cutting system (1) according to claim 1,
wherein the profit managing device (120) includes a display screen (121), and
the management controller (123) includes a display controller (159) that displays, on the display screen (121), whether profits were generated for the periodic profits (215) in the predetermined period (T1), which has been calculated by the profit calculator (158).

3. The cutting system (1) according to claim 2,
wherein the display controller (159) displays whether profits were generated for the periodic profits (215) in the predetermined period (T1) using a predetermined graph (G101).

4. The cutting system (1) according to claim 2 or 3,
wherein a sales turnover for the cutting machine 100 or a sales turnover for another cutting machine (200) is stored in the management storage (130), and
the display controller (159) displays, on the display screen (121), the cutting machine (100) or the another cutting machine (200) that can be purchased using the periodic profits (215), based on the periodic profits (215), the sales turnover for the cutting machine (100), and the sales turnover for the another cutting machine (200).

5. The cutting system (1) according to any one of claims 1 to 4,
wherein, when the cutting program (PG1) executed at occurrence of an error in the cutting machine (100) is an error program (PG2),
the tool usage measurement controller (63) measures a tool error usage (174) that is a usage of the processing tool (8) gripped by the tool gripper (32) at execution of the error program (PG2),
the transmitter (69) transmits the tool error usage (174),
the receiver (135) receives the tool error usage (174),
the management controller (123) includes
a first error cost calculator (151) configured or programmed to calculate a material error cost (203) at execution of the error program (PG2), based on a material error usage (173) that is the material usage (163) set in the error program (PG2),
a second error cost calculator (152) configured or programmed to calculate a tool error cost (204) at execution of the error program (PG2), based on the tool error usage (174) received by the receiver (135), and
a periodic error cist calculator (156) configured or programmed to calculate a periodic error cost (212) that is a total of costs for the error program (PG2) executed in the predetermined period (T1), based on the material error cost (203) and the tool error cost (204), and
the profit calculator (158) calculates the periodic profits (215), based on the periodic cost (211), the periodic sales (180), the depreciation expense (219) for the cutting machine (100), and the periodic error cost (212).

6. The cutting system (1) according to claim 5,
wherein the rotation time measurement controller (65) measures a spindle error rotation time (175) that is a rotation time of the spindle (31) at execution of the error program (PG2),
the transmitter (69) transmits the spindle error rotation time (175),
the receiver (135) receives the spindle error rotation time (175),
the management controller (123) includes a third error cost calculator (153) configured or programmed to calculate a spindle error cost (205) at execution of the error program (PG2), based on the spindle error rotation time (175) received by the receiver (135), and
the periodic error cist calculator (156) calculates the periodic error cost (212), based on at least the material error cost (203), the tool error cost (204), and the spindle error cost (205).

7. The cutting system (1) according to claim 5 or 6,
wherein the time acquirer (136) acquires an error operation time (176) of the user, which has been set for each error program (PG2) executed by the cutting machine (100),
the management controller (123) includes a fourth error cost calculator (154) configured or programmed to calculate a personnel error cost (206) at execution of the error program (PG2), based on the error operation time (176) acquired by the time acquirer (136), and
the periodic error cist calculator (156) calculates the periodic error cost (212), based on at least the material error cost (203), the tool error cost (204), and the personnel error cost (206).

8. The cutting system (1) according to any one of claims 1 to 7,
wherein a unit material cost (183) that is a material cost per predetermined unit of a material usage, a unit tool cost (184) that is a tool cost per predetermined unit of a tool usage, a unit spindle cost (185) that is a spindle cost per predetermined unit of a spindle rotation time, and a unit personnel cost (186) that is a personnel cost per predetermined unit of an operation time are stored in the management storage (130),
the first cost calculator (141) calculates the material cost (193) from the material usage (163) and the unit material cost (183),
the second cost calculator (142) calculates the tool cost (194) from the tool usage (164) and the unit tool cost (184),
the third cost calculator (143) calculates the spindle cost (195) from the spindle rotation time (165) and the unit spindle cost (185), and
the fourth cost calculator (144) calculates the personnel cost (196) from the operation time (166) and the unit personnel cost (186).

9. The cutting system (1) according to claim 8,
wherein the first cost calculator (141) calculates the material cost (193) by multiplying the material usage (163) and the unit material cost (183) together,
the second cost calculator (142) calculates the tool cost (194) by multiplying the tool usage (164) and the unit tool cost (184) together,
the third cost calculator (143) calculates the spindle cost (195) by multiplying the spindle rotation time (165) and the unit spindle cost (185) together, and
the fourth cost calculator (144) calculates the personnel cost (196) by multiplying the operation time (166) and the unit personnel cost (186) together.

10. The cutting system (1) according to any one of claims 1 to 8,
wherein the number of the cutting machines (100) is at least two or more.
